Europäisches Patentamt

European Patent Office

Office européen des brevets

(19)

(11) Veröffentlichungsnummer : **0 122 333**
**B1**

# (12) EUROPÄISCHE PATENTSCHRIFT

(45) Veröffentlichungstag der Patentschrift :
18.06.86

(21) Anmeldenummer : 83112774.1

(22) Anmeldetag : 19.12.83

(51) Int. Cl.⁴ : **B 23 K 11/30**, B 23 K 11/06

(54) **Verfahren zum elektrischen Widerstandsrollennahtschweissen mit nur einem Elektrodendraht und Schweissmaschine zur Durchführung des Verfahrens.**

(30) Priorität : 27.01.83 CH 444/83

(43) Veröffentlichungstag der Anmeldung :
24.10.84 Patentblatt 84/43

(45) Bekanntmachung des Hinweises auf die Patenterteilung : 18.06.86 Patentblatt 86/25

(84) Benannte Vertragsstaaten :
AT BE CH DE FR GB IT LI LU NL SE

(56) Entgegenhaltungen :
DE-A- 1 565 803
DE-C- 2 126 497
US-A- 3 015 713

(73) Patentinhaber : ELPATRONIC AG
Baarerstrasse 117
CH-6300 Zug (CH)

(72) Erfinder : Opprecht, Paul
Herrenbergstrasse 10
CH-8962 Bergdietikon (CH)
Erfinder : Kaul, Martin
Langächerstrasse 204
CH-5454 Bellikon (CH)
Erfinder : Weil, Wolfgang
Mozartstrasse 8
D-7843 Heitersheim (DE)

(74) Vertreter : Hotz, Klaus, Dipl.-El.-Ing. / ETH
c/o SOUDRONIC AG Industriestrasse 35 Postfach 11
CH-8962 Bergdietikon (CH)

EP 0 122 333 B1

**Beschreibung**

Die Erfindung bezieht sich auf ein Verfahren zum elektrischen Widerstandsrollennahtschweissen mit Hilfe von nur einem Elektrodendraht, der zuerst über eine erste und dann über eine zweite von zwei gegeneinander pressbaren Elektrodenträgerrollen läuft und dessen Festigkeit durch Auswalzen vor dem Einlauf in die erste Elektrodenträgerrolle erhöht wird, sowie auf eine Schweissmaschine zur Durchführung dieses Verfahrens.

Ein Verfahren dieser Art is z. B. aus der DE-PS 2 126 497 bekannt. Mit diesem Verfahren wurde erstmals ein kontinuierliches-Widerstandsrollennahtschweissen mit Hilfe von nur einem Elektrodendraht ermöglicht und damit die Grundlage für mit nur einem Elektrodendraht arbeitende Hochgeschwindigkeits-Schweissautomaten geschaffen, und zwar im Prinzip dadurch, dass durch das Auswalzen des Elektrodendrahtes vor seinem Einlauf in die erste Elektrodenträgerrolle und die damit verbundene Festigkeitserhöhung des Elektrodendrahtes die vorher bei Verfahren zum Widerstandsrollennahtschweissen mit Hilfe von nur einem Elektrodendraht wie beispielsweise dem aus der DE-OS 1 565 803 bekannten Verfahren infolge eines Abwalzens des Elektrodendrahtes unter dem Pressdruck der ersten Elektrodenträgerrolle auftretende Schlaufenbildung in der Drahtschleife zwischen erster und zweiter Elektrodenträgerrolle verhindert wurde und infolgedessen die bei dem Verfahren nach der DE-OS 1 565 803 noch bestehende Notwendigkeit entfiel, den Schweissprozess jeweils nach kurzer Schweissdauer zum Herausziehen der während derselben gebildeten Schlaufe aus der besagten Drahtschleife zu unterbrechen.

Das Verfahren nach der DE-PS 2 126 497 erfordert allerdings hinsichtlich der richtigen Bemessung des Pressdrukkes der Elektrodenträgerrollen und der Kühlung derselben und damit des Elektrodendrahtes gute Sachkenntnisse des das Verfahren anwendenden Fachmannes auf dem Gebiet des Widerstandsrollennahtschweissens mit Elektrodendrähten und bezüglich der Werkstoffeigenschaften des Elektrodendrahtmaterials insbesondere hinsichtlich Rekristallisationstemperatur und deren Abhängigkeit vom Verformungsgrad sowie hinsichtlich der Temperaturabhängigkeit des Spannungs-Dehnungs-Verhaltens, denn beispielsweise ergibt sich an der Schweissstelle bei einer Elektrodendrahttemperatur von z. B. 200 °C bei dem üblicherweise als Drahtmaterial verwendeten Kupfer allein schon durch Wärmeausdehnung eine Drahtdehnung von ca. 0,33 %, die zwar bei geeigneter Kühlung des Elektrodendrahtes nach Verlassen der Schweissstelle wenigstens grösstenteils wieder zurückgeht, die aber z. B. bei ungenügender Beachtung der Betriebsvorschriften einer mit dem genannten Verfahren arbeitenden Schweissmaschine durch das Bedienungspersonal ebenso auch erhalten bleiben oder sich sogar noch vergrössern kann.

Solche relativ geringen Drahtdehnungen bilden — jedenfalls solange sie einen bestimmten, nach der Erfahrung bei etwa 2,5 % liegenden Höchstwert nicht wesentlich überschreiten — kein Hindernis für die Durchführung des genannten Verfahrens bzw. für das mit diesem Verfahren ermöglichte kontinuierliche Widerstandsrollennahtschweissen mit Hilfe von nur einem Elektrodendraht, aber sie verhindern die Erzielung einer optimalen Schweissqualität, und zwar in umso stärkerem Masse, je mehr sich die relativ geringe Drahtdehnung an den genannten Höchstwert von ca. 2,5 % annähert. Der Grund dafür ist, dass bei einer beim Passieren der ersten Elektrodenträgerrolle auftretenden relativ geringen Dehnung die Dehnungslänge durch die beim Widerstandsrollennahtschweissen mit Elektrodendraht erforderliche Drahtspannung weggezogen wird, und zwar bei Antrieb der ersten Elektrodenträgerrolle in der Regel in Bewegungsrichtung des Elektrodendrahtes über die zweite Elektrodenträgerrolle und bei Antrieb der zweiten Elektrodenträgerrolle in der Regel entgegen der Bewegungsrichtung des Elektrodendrahtes unmittelbar aus der ersten Elektrodenträgerrolle heraus, und dass sich infolge dieses « Wegziehens der Dehnungslänge » der Drehbewegung derjenigen Elektrodenträgerrolle, über die die Dehnungslänge weggezogen wird, eine dieser Dehnungslänge entsprechende zusätzliche Drehbewegung überlagert, so dass sich die Umfangsgeschwindigkeit derjenigen Elektrodenträgerrolle, über die die Dehnungslänge weggezogen wird, im Verhältnis zu der Umfangsgeschwindigkeit der anderen Elektrodenträgerrolle um einen der prozentualen Dehnung entsprechenden Differenzbetrag ändert und sich somit unterschiedliche Umfangsgeschwindigkeiten der beiden Elektrodenträgerrollen ergeben, die dazu führen, dass mindestens eine der beiden Elektrodenträgerrollen bzw. der auf dieser aufliegende Elektrodendraht nicht exakt sondern mit Schlupf auf dem zu schweissenden Werkstück abrollt, wobei der auf die Schweissgeschwindigkeit bezogene prozentuale Schlupf im Regelfall, d. h. wenn er nur auf einer der beiden Werkstückseiten auftritt, der prozentualen Dehnung entspricht. Im einzelnen entsteht der Schlupf jeweils dann, wenn sich die Werkstückoberfläche in der Endphase der Anbringung eines Schweisspunktes der Schweissnaht etwas erweicht und die auf der Werkstückoberfläche aufliegende Drahtoberfläche sich daher trotz des Pressdruckes der Elektrodenträgerrolle dadurch etwas in Schweissnahtrichtung verschieben kann, dass sie die erweichte Werkstückoberfläche mitnimmt und damit sozusagen die Werkstückoberfläche auf dem Werkstück verschiebt. Diese « Verschiebungen » der Werkstückoberfläche auf dem Werkstück beeinträchtigen natürlich die Schweissqualität, und da das Ausmass dieser Verschiebungen bzw. die Verschiebungslänge proportional dem Schlupf und damit proportional der prozentualen Dehnung ist, wird diese Beeinträchtigung der Schweissqualität umso grösser, je grösser die Drahtdehnung ist, bis die Beeinträchtigung dann bei über dem genannten Höchstwert von ca. 2,5 % liegenden prozentualen Drahtdehnungen das noch tragbare Mass überschreitet.

Um die vorstehend beschriebenen Beeinträchtigungen der Schweissqualität weitgehend auszuschliessen und eine möglichst optimale Schweissqualität zu erzielen, sollten daher auch die genannten relativ geringen Drahtdehnungen so weit als möglich verhindert werden, wobei es nicht nur darauf ankommt, bei genau den Betriebsvorschriften entsprechendem Betrieb einer mit dem genannten Verfahren arbeitenden Schweissmaschine eine Drahtdehnung praktisch vollständig auszuschliessen bzw. auf vernachlässigbar geringe Werte abzusenken, sondern auch bei möglichen Abweichungen von den Betriebsvorschriften daraus resultierende Drahtdehnungen so gering wie möglich und auf jeden Fall wesentlich unter dem obengenannten Höchstwert zu halten. Wenn also beispielsweise bei einer bestimmten Elektrodendrahttemperatur an der Schweissstelle und einer bestimmten vorgegebenen Drahtspannung des Elektrodendrahtes sowie einem bestimmten vorgegebenen Pressdruck der Elektrodenträgerrolle auf den Elektrodendraht an der Schweissstelle der sich aus der Drahtspannung ergebende Arbeitspunkt in dem für eine der Elektrodendrahttemperatur entsprechende Temperatur und einen dem Pressdruck der Elektrodenträgerrolle entsprechenden Querdruck als Parameter geltenden Spannungs-Dehnungs-Diagramm nur wenig unter der Elastizitätsgrenze liegt und diese Drahtspannungs-, Pressdruck- und Temperaturverhältnisse bei genauer Einhaltung der Betriebsvorschriften an der Schweissstelle gegeben sind, dann ergibt sich bei genauer Einhaltung der Betriebsvorschriften lediglich eine elastische Verformung des Elektrodendrahtes an der Schweissstelle, während sich im Rahmen möglicher Abweichungen von den Betriebsvorschriften eine ganze Reihe von Möglichkeiten für eine Ueberschreitung der besagten Elastizitätsgrenze und daraus resultierende Drahtdehnungen ergeben. So kann beispielsweise ein etwas zu hoher Pressdruck der Elektrodenträgerrollen oder eine etwas zu geringe Kühlung derselben, eine zu hohe Drahtspannung des Elektrodendrahtes oder ein etwas zu geringer Drahtquerschnitt desselben oder auch eine andere Fehlerquelle wie z. B. Eletrodendrahtmaterial von ungenügender Reinheit oder unvorschriftsmässiger Zusammensetzung und daraus resultierenden, von den Nennwerten abweichenden Materialeigenschaften, ein zu hoher Verformungsgrad des Elektrodendrahtes infolge von Ungenauigkeiten beim Auswalzen desselben und eine daraus oder auch aus von den Nennwerten abweichenden Materialeigenschaften des Elektrodendrahtmaterials resultierende zu geringe Rekristallisationstemperatur des ausgewalzten Elektrodendrahtmaterials, und schliesslich sogar ein in der Regel an den Aufstellungsorten von Schweissmaschinen kaum beeinflussbarer und meist auch wenig beachteter Faktor wie eine hohe Raumtemperatur die Ursache von sich ergebenden unerwünschten Drahtdehnungen sein.

Die Vielzahl dieser möglichen Ursachen ergibt sich bei dem vorausgesetzten, mit der Praxis recht gut übereinstimmenden Beispiel im Prinzip daraus, dass nahe an der Elastizitätsgrenze gearbeitet wird und daher die verschiedensten Ursachen zu einer Ueberschreitung derselben führen können, und natürlich ist bei einer solchen Vielzahl von möglichen Ursachen die Feststellung der tatsächlichen Ursache einer sich ergebenden Drahtdehnung mit beträchtlichen Schwierigkeiten verbunden, zumal bei einigen der oben erläuterten möglichen Ursachen wie z. B. dem Auswalzen, der Reinheit des Drahtmaterials und besonders auch der Raumtemperatur der Zusammenhang mit sich ergebenden unerwünschten Drahtdehnungen nicht ohne weiteres ersichtlich ist. Aufgrund dieser Schwierigkeiten in der Ursachenerkennung wurden daher in vielen Fällen sich ergebende relativ geringe Drahtdehnungen und die daraus resultierenden Beeinträchtigungen der Schweissqualität, jedenfalls soweit sie nicht allzu gross waren, für unvermeidbar angesehen.

Der Erfindung lag nun die Aufgabe zugrunde, ein Verfahren der eingangs genannten Art und eine Vorrichtung zur Durchführung dieses Verfahrens zu schaffen, mit dem zumindest die meisten der genannten Ursachen für unerwünschte Drahtdehnungen ausgeschaltet werden können und das daher auch bei in gewissen Grenzen liegenden Abweichungen von den Betriebsvorschriften einer mit dem eingangs genannten bekannten Verfahren arbeitenden Schweissmaschine die Erzielung einer wenigstens nahezu optimalen Schweissqualität gestattet.

Erfindungsgemäss wird das bei einem Verfahren der eingangs genannten Art dadurch erreicht, dass der Elektrodendraht in mindestens einem der von ihm durchlaufenen beiden Bereiche zwischen dem Auswalzen und dem Einlauf in die erste Elektrodenträgerrolle und zwischen dem Auslauf aus der ersten Elektrodenträgerrolle und dem Einlauf in die zweite Elektrodenträgerrolle mit Hilfe von mindestens einer Kühlvorrichtung gekühlt wird.

Der Erfindung liegt die Erkenntnis zugrunde, dass man zumindest die meisten der genannten Ursachen für unerwünschte Drahtdehnungen durch eine relativ geringe Erhöhung der Elastizitätsgrenze ausschalten kann, weil die in der Praxis vorkommenden möglichen Abweichungen von den Nennbetriebsdaten z. B. bei Pressdruck und Kühlung der Elektrodenträgerrollen und bei Drahtspannung und Drahtquerschnitt des Elektrodendrahtes in aller Regel unter 10 % liegen und der Arbeitspunkt somit bei einer Erhöhung der Elastizitätsgrenze um z. B. 15 % auch im Falle solcher Abweichungen, jedenfalls sofern sie sich nicht kumulieren, noch unter der Elastizitätsgrenze bleibt, und dass zur Erzielung solcher relativ geringen Erhöhungen der Elastizitätsgrenze aufgrund der Temperaturabhängigkeit der Spannungs-Dehnungs-Diagramme im Prinzip eine einzige Massnahme ausreicht, nämlich die Herabsetzung der Elektrodendrahttemperatur an der · Schweissstelle um eine relativ geringe Temperaturdifferenz, und dass man eine solche Herabsetzung der Elektrodendrahttemperatur an der Schweissstelle im Prinzip durch eine Verschiebung der gesamten Verteilungskurve der Elektrodendrahttemperatur über dem vom Elektrodendraht durchlaufenen Weg um die genannte Temperaturdifferenz nach unten erreichen kann, dass man also den Elektrodendraht auf einem relativ niedrigen Temperaturniveau, wie es in der genannten Verteilungskurve ausserhalb der Bereiche, in denen der Elektrodendraht über die Elektrodenträgerrollen läuft, vorhanden ist, um die genannte Temperaturdifferenz abkühlen kann und dadurch eine entsprechende Herabsetzung der Elektrodendrahttemperatur an der Schweissstelle erreichen kann.

Hauptvorteil des vorliegenden Verfahrens ist die unkritischere Einstellung der Betriebsdaten ohne gleichzeitigen Verzicht auf die bisher nur mit genauer Einstellung erzielbare optimale Schweissqualität, und weitere Vorteile ergeben sich daraus natürlich auch hinsichtlich des Wegfalles eines grossen Teiles der bei kritischer Einstellung im Dauerbetrieb erforderlichen häufigen Kontrollen der Betriebsdaten auf Uebereinstimmung mit den vorgeschriebenen Werten sowie der notwendigen Nachstellungen bei Abweichungen von diesen Werten bzw. hinsichtlich des Wegfalles der bei kritischer Einstellung im Dauerbetrieb im Falle der Weglassung der vorgenannten Kontrollen und Nachstellungen gegebenenfalls auftretenden und in Kauf zu nehmenden Verschlechterungen der Schweissqualität und ferner auch hinsichtlich grösserer Variationsmöglichkeiten in den verwendeten Materialien wie z. B. der Verwendungsmöglichkeit von von Blechen mit grösseren Blechstärketoleranzen für den Schweissbetrieb oder der Verwendungsmöglichkeit von Kupferdrähten mit unterschiedlichem Reinheitsgrad des Kupfers als Elektrodendraht.

Mit besonderem Vorteil kann der Elektrodendraht bei dem vorliegenden Verfahren in mindestens einem der beiden Bereiche über eine als Kühlvorrichtung wirkende, von einem zur Wärmeabfuhr dienenden Kühlmittel, vorzugsweise Wasser, durchströmte Kühltrommel laufen, wobei der Draht vorzugsweise zur Vermeidung von Querverschiebungen in Trommelachsrichtung durch Führungsnuten geführt wird. Der Vorteil der Verwendung einer Kühltrommel als Kühlvorrichtung ist die damit erreichbare intensive Kühlung bei relativ geringem Platzbedarf. Es ist aber beispielsweise auch möglich und kann hinsichtlich des technischen Aufwandes von Vorteil sein, als Kühlvorrichtung einen einfachen Ventilator mit auf den Elektrodendraht gerichteter Strömungsdüse zu verwenden.

Zur Vermeidung von Querverschiebungen in Führungsnuten kann der Elektrodendraht bei dem vorliegenden Verfahren zweckmässig nach dem Auswalzen seitlich an seinen durch das Auswalzen entstandenen Schmalseiten mittels eines mit einer Kalibriernut in mindestens einer seiner beiden Rollenwalzen versehenen Rollenwalzenpaares mindestens annähernd auf · die Breite der schmalsten der zu durchlaufenden Führungsnuten kalibriert werden. Eine solche Kalibrierung hat neben der guten Führung des Elektrodendrahtes in Führungsnuten mit der Kalibrierungsbreite entsprechender Weite noch eine Reihe weiterer Vorteile, von denen die wichtigsten die Verhinderung von Ueberhöhungen der Elektrodentemperatur an der Schweissstelle, die infolge von Querverschiebungen des Elektrodendrahtes in den Führungsnuten der Elektrodenträgerrollen und dadurch verursachten ungenügenden Kontaktflächen zwischen Elektrodendraht und Werkstück an der Schweissstelle und sich daraus ergebenden erhöhten Uebergangswiderständen zwischen Elektrodendraht und Werkstück entstehen können, und ferner die sich mit der Kalibrierung ergebende Einebnung von eventuell nach dem Auswalzen noch bestehenden leichten konkaven Flächenkrümmungen an den Flachseiten des ausgewalzten Elektrodendrahtes sind, wobei durch die Einebnung ebenfalls überhöhte Uebergangswiderstände zwischen Elektrodendraht und Werkstück und daraus resultierende Ueberhöhungen der Elektrodentemperatur an der Schweisstelle verhindert werden. Die Kalibrierung der Breite des ausgewalzten Elektrodendrahtes ist daher in erster Linie auf die Breite der Führungsnuten der Elektrodenträgerrollen und von diesen wiederum auf die Breite der Führungsnut in der von dem ausgewalzten und kalibrierten Elektrodendraht zuerst durchlaufenen ersten Elektrodenträgerrolle abzustellen, wobei natürlich durch entsprechende Anpassung der Breite der von dem Elektrodendraht zu durchlaufenden anderen Führungsnuten wie der erwähnten Führungsnuten in der Kühltrommel an die Breite der Führungsnut in der ersten Elektrodenträgerrolle auch in diesen anderen Führungsnuten eine gute Führung des Elektrodendrahtes erzielt und Querverschiebungen desselben in der Führungsnut vermieden werden können. In diesem Zusammenhang ist aber zu bemerken, dass eine solche Anpassung der Breite anderer Führungsnuten wie z. B. von Führungsnuten der Kühltrommel an die Breite der Führungsnut in der ersten Elektrodenträgerrolle nur dann in Betracht gezogen werden sollte, wenn der Elektrodendraht sowohl beim Einlauf in die Führungsnut als auch beim Auslauf aus derselben genau rechtwinklig zur Achse der die Führungsnut tragenden Rolle oder Trommel verläuft, während bei nicht genau rechtwinklig zu dieser Achse ein- oder auslaufendem Draht eine gegenüber der Drahtbreite grössere Breite der Führungsnut erforderlich ist, so dass der Draht auch innerhalb der Führungsnut seine Schräglage . zur Achse beibehalten kann. Umgekehrt dergibt sich daraus ferner, dass bei Kalibrierung der Drahtbreite auf die Breite der Führungsnuten der Elektrodenträgerrollen auch Einlauf und Auslauf des Elektrodendrahtes in die bzw. aus den Führungsnuten der Elektrodenträgerrollen rechtwinklig zur Achse der betreffenden Elektrodenträgerrolle erfolgen sollte oder, sofern das nicht realisierbar ist, die Führungsnut in der Elektrodenträgerrolle, bei der ein nicht genau rechtwinkliger Ein- oder Auslauf des Elektrodendrahtes nicht zu vermeiden ist, um so viel breiter als die Drahtbreite gemacht werden sollte, dass der Draht in der Führungsnut seine Schräglage zur Achse beibehalten kann.

Bei Verwendung einer Kühltrommel als Kühlvorrichtung kann der Elektrodendraht bei dem vorliegenden Verfahren vorteilhaft derart über die Kühltrommel geführt werden, dass er über einen Winkelbereich von insgesamt mindestens 180°, vorzugsweise mehr als 250°, auf der Kühltrommel aufliegt. Ein solcher möglichst grosser Auflagewinkel des Elektrodendrahtes auf der Kühltrommel hat bei gegebener Kühlleistung bzw. gegebener durchströmender Wassermenge pro Zeiteinheit den Vorteil einer besseren Kühlung des Elektrodendrahtes und bei vorgegebener Kühlung des Elektrodendrahtes den Vorteil einer geringeren erforderlichen Kühlleistung. Maximal lassen sich in diesem Sinne bei einer Umschlingung der Trommel Auflagewinkel bis etwa 330° erreichen, wobei aber dann eine zur Drahtführung vorgesehene Führungsnut mindestens doppelt so breit wie die Drahtbreite sein sollte. Lässt sich auch mit einem solchen maximalen Auflagewinkel die erforderliche Kühlung des Elektrodendrahtes nicht erreichen, dann kann im Prinzip auch mit mehreren Umschlingungen der Trommel gearbeitet werden. Dabei wird der Elektrodendraht vorteilhaft in mindestens einem der beiden genannten Bereiche derart über die Kühltrommel und eine neben derselben angeordnete Laufrolle mit zur Kühltrommelachse mindestens annähernd paralleler Laufrollenachse und vorzugsweise mindestens annähernd gleichem Durchmesser wie dem der Kühltrommel geführt, dass der Elektrodendraht nacheinander über eine erste und eine zweite Führungsnut der Kühltrommel und dazwischen so über die Laufrolle läuft, dass sich diese im entgegengesetzten Drehsinn wie die Kühltrommel dreht.

Zweckmässig kann bei dem vorliegenden Verfahren der Elektrodendraht in mindestens einem der beiden genannten Bereiche bis auf eine weniger als 25 °C, vorzugsweise weniger als 15 °C, über der Raumtemperatur liegende Temperatur abgekühlt werden. Dabei verbleiben noch relativ grosse Temperaturdifferenzen in der Grössenordnung von 10 bis 30 °C zwischen der Elektrodendrahttemperatur und den üblichen, in der Regel unter 15 °C liegenden Kühlwassertemperaturen, so dass sich der Vorteil eines relativ geringen Kühlwasserverbrauches ergibt. Will man noch geringere Temperaturdifferenzen von z. B. ca 5 °C erreichen, dann empfiehlt sich die oben erwähnte Anwendung einer mehrfachen Umschlingung der Kühltrommel.

Bei einer vorteilhaften Weiterbildung des vorliegenden Verfahrens wird der Elektrodendraht in dem Bereich zwischen erster und zweiter Elektrodenträgerrolle zur Herabsetzung der Drahterwärmung infolge des in diesem Bereich über den Elektrodendraht fliessenden Nebenstromes zum Schweissstrom durch einen vorzugsweise rohrförmigen Ringkern aus einem hochpermeablen Material geführt, durch den in dem Elektrodendraht eine den Nebenstrom herabsetzende Gegenspannung induziert wird. Durch diese Massnahme lässt sich der Nebenstrom und damit die durch denselben erzeugte zusätzliche Drahterwärmung nahezu vollständig unterdrücken. Die Anwendung dieser Massnahme ist insbesondere dann von Vorteil, wenn die Elektrodendrahttemperatur bis auf einen nur noch wenig über der Kühlwassertemperatur liegenden Wert herabgesetzt werden soll und der Nebenstrom eine so weitgehende Herabsetzung der Elektrodendrahttemperatur verhindert.

Bei einer bevorzugten Ausbildungsform des vorliegenden Verfahrens wird der Elektrodendraht in beiden Bereichen mittels ein und derselben Kühlvorrichtung gekühlt, was den Vorteil einer wesentlichen Verringerung des technischen Aufwandes für die Kühlung des Elektrodendrahtes mit sich bringt. Bei einer Kühltrommel als Kühlvorrichtung wird dabei der Elektrodendraht in beiden Bereichen über ein und dieselbe Kühltrommel geführt. Dabei kann es insbesondere dann, wenn sich die genannte Drahterwärmung durch den besagten Nebenstrom störend auswirkt, von wesentlichem Vorteil sein, den Elektrodendraht zur Vermeidung einer elektrischen Parallelschaltung der innerhalb der beiden genannten Bereiche jeweils zwischen Kühltrommel und erster Elektrodenträgerrolle befindlichen Elektrodendrahtabschnitte und eine dadurch infolge der daraus resultierenden elektrischen Widerstandsverminderung und der sich damit ergebenden Stromerhöhung des im Bereich zwischen erster und zweiter Elektrodenträgerrolle über den Elektrodendraht fliessenden Nebenstromes zum Schweissstrom verursachten Erhöhung der durch den Nebenstrom bewirkten Drahterwärmung in den beiden genannten Bereichen über elektrisch im wesentlichen voneinander isolierte Teile der Kühltrommel zu führen. Anstelle dieser Massnahme oder gegebenenfalls auch zusätzlich zu dieser kann der Elektrodendraht auch vorteilhaft in dem zwischen Kühlvorrichtung bzw. Kühltrommel und zweiter Elektrodenträgerrolle liegenden Teil des Bereiches zwischen erster und zweiter Elektrodenträgerrolle durch den oben schon erwähnten Ringkern geführt werden, wobei der Nebenstrom durch die letztere Massnahme bei geeigneter Bemessung des Ringkernes praktisch nahezu vollständig unterdrückt werden kann und in diesem Fall natürlich die erstere Massnahme, also die Vermeidung der genannten Parallelschaltung durch eine aus zwei voneinander isolierten Teilen bestehende Kühltrommel, überflüssig wird. Zu bemerken ist in diesem Zusammenhang aber noch, dass der Begriff Ringkern hier im magnetischen Sinne, also im Sinne von den Draht im wesentlichen umschliessenden ferromagnetischem Material, und nicht in konstruktivem Sinne gemeint ist.

Von Vorteil ist bei dem vorliegenden Verfahren ferner, wenn der Elektrodendraht bei Antrieb von einer der beiden Elektrodenträgerrollen zur Erzielung von in beiden Bereichen im wesentlichen gleichgrossen Durchlaufgeschwindigkeiten durch die Kühlvorrichtung, insbesondere von im wesentlichen gleichgrossen Laufgeschwindigkeiten über eine als Kühlvorrichtung vorgesehene Kühltrommel, zwischen den genannten beiden Bereichen über die nicht angetriebene Elektrodenträgerrolle geführt wird und vorher, vorzugsweise vor seinem Einlauf in die Kühlvorrichtung, zur Erzielung einer ausreichenden Drahtspannung eine den durchlaufenden Draht zurückhaltende, vorzugsweise als Drahtbremse ausgebildete Vorrichtung durchläuft. Dabei kann gegebenenfalls auch die zum Auswalzen des Elektrodendrahtes vorgesehene Vorrichtung bei geeigneter Regelung ihrer Walzgeschwindigkeit mittels der Abweichung der gemessenen Drahtspannung von einem vorgegebenen Spannungswert als Regelabweichung mit Vorteil als den durchlaufenden Draht zurückhaltende Vorrichtung verwendet werden, wobei dann auf eine gesonderte Drahtbremse verzichtet werden kann. Die Verwendung einer gesonderten Drahtbremse hat demgegenüber den Vorteil, dass die Drahtspannung am Ausgang der Auswalzvorrichtung nicht durch den genannten vorgegebenen Spannungswert festgelegt ist sondern im Prinzip frei gewählt werden kann, was in manchen Fällen für ein gutes Funktionieren der Auswalzvorrichtung erforderlich ist.

Die Erfindung betrifft ferner eine elektrische Schweissmaschine zum Widerstandsrollennahtschweissen mit Hilfe von nur einem zuerst über eine erste und dann über eine zweite von zwei gegeneinander pressbaren Elektrodenträgerrollen laufenden Elektrodendraht mit Mitteln zum eine Festigkeitserhöhung des Elektrodendrahtes bewirkenden Auswalzen desselben vor dem Einlauf in die erste Elektrodenträgerrolle, die gekennzeichnet ist durch mindestens eine Kühlvorrichtung zur Kühlung des Elektrodendrahtes in mindestens einem der beiden Drahtführungsbereiche zwischen den Auswalzmitteln und der ersten Elektrodenträgerrolle und zwischen der ersten und der zweiten Elektrodenträgerrolle.

Diese Schweissmaschine kann vorteilhaft eine als Kühlvorrichtung dienende, vorzugsweise mit Führungsnuten versehene Kühltrommel zur Kühlung des Elektrodendrahtes in mindestens einem der beiden genannten Drahtführungsbereiche, ein mit einer Kalibriernut in mindestens einer seiner Rollenwalzen versehenes Rollenwalzenpaar in dem Drahtführungsbereich zwischen Auswalzmitteln und erster Elektrodenträgerrolle, Mittel zu einer derartigen Drahtführung, dass der Elektrodendraht über einen Winkelbereich von insgesamt mindestens 180°, vorzugsweise mehr als 250°, auf der Kühltrommel aufliegt, und ferner einen den Elektrodendraht im Drahtführungsbereich zwischen erster und zweiter Elektrodenträgerrolle umschliessenden, vorzugsweise rohrförmigen Ringkern aus einem hochpermeablen Material sowie eine neben der Kühltrommel angeordnete Laufrolle mit zur Kühltrommelachse mindestens annähernd paralleler Laufrollenachse und vorzugsweise mindestens annähernd gleichem Durchmesser wie dem der Kühlrolle oder auch nur einen Teil der vorgenannten Mittel umfassen und in Bezug auf die genannte Laufrolle vorteilhaft eine derartige Drahtführung aufweisen, dass der Elektrodendraht nacheinander über eine erste und eine zweite Führungsnut der Kühltrommel und dazwischen so über die Laufrolle läuft, dass sich diese in entgegengesetztem Drehsinn wie die Kühltrommel dreht.

Eine bevorzugte Ausbildungsform der vorliegenden Schweissmaschine weist eine zur Kühlung des Elektrodendrahtes in beiden genannten Drahtführungsbereichen dienende Kühlvorrichtung auf, und zwar vorzugsweise eine Kühltrommel. Die Kühltrommel kann vorteilhaft mehrere elektrisch im wesentlichen voneinander isolierte Trommelteile aufweisen, wobei dann eine derartige Drahtführung vorzusehen ist, dass der Elektrodendraht in den beiden genannten Drahtführungsbereichen über elektrisch im wesentlichen voneinander isolierte Trommelteile läuft. Wenn die Schweissmaschine mit den zuvor genannten Ringkern versehen ist, sollte der Ringkern bei der in Rede stehenden bevorzugten Ausbildungsform der Schweissmaschine den Elektrodendraht zweckmässig in dem zwischen Kühlvorrichtung und zweiter Elektrodenträgerrolle liegenden Teil des Drahtführungsbereiches zwischen erster und zweiter Elektrodenträgerrolle umschliessen.

Besonders vorteilhaft ist ferner eine Ausbildung der vorliegenden Schweissmaschine mit einem Antrieb für die zweite Elektrodenträgerrolle und den Elektrodendraht zurückhaltenden Mitteln zur Erzeugung einer Drahtspannung in der Drahtführung vor der ersten Elektrodenträgerrolle und vorzugsweise vor der Kühlvorrichtung.

Anhand der nachstehenden Figuren ist die Erfindung im folgenden an einigen Ausführungsbeispielen näher erläutert.

Es zeigen

Figur 1 ein Schema des prinzipiellen Aufbaues einer Vorrichtung zur Durchführung des vorliegenden Verfahrens mit Kühlung des Elektrodendrahtes vor der ersten und zwischen erster und zweiter Elektrodenträgerrolle und Antrieb der ersten Elektrodenträgerrolle,

Figur 2 ein Schema des prinzipiellen Aufbaues einer Vorrichtung zur Durchführung des vorliegenden Verfahrens mit Kühlung des Elektrodendrahtes vor der ersten und zwischen erster und zweiter Elektrodenträgerrolle und Antrieb der zweiten Elektrodenträgerrolle,

Figur 3 ein Detailschema der Drahtführung des Elektrodendrahtes für mehrfache Umschlingung einer zur Kühlung desselben vorgesehenen Kühltrommel.

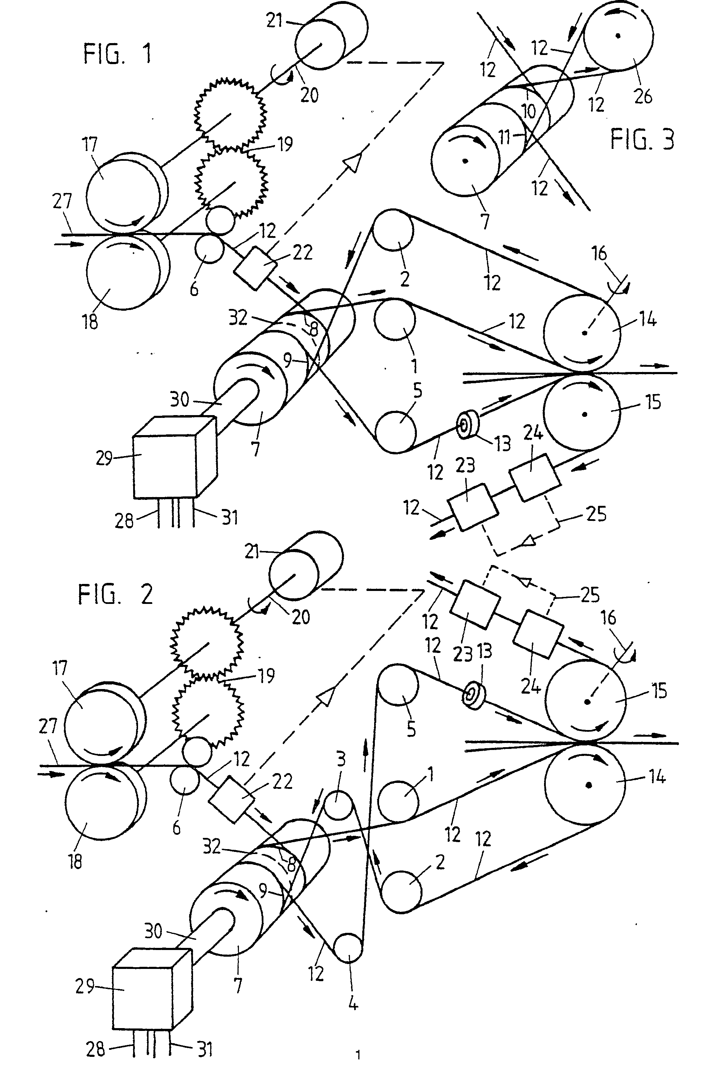

Im voraus sei darauf hingewiesen, dass die in den Figuren 1 und 2 gezeigten Aufbauscheme nur die für die Durchführung des vorliegenden Verfahrens einerseits und für eine übersichtliche zeichnerische Darstellung andererseits notwendigen Teile von zur Durchführung des vorliegenden Verfahrens geeigneten Schweissmaschinen zeigen und dass auch die gezeigten Teile zum grossen Teil in symbolisierter Form dargestellt sind. So dienen beispielsweise die in den Figuren 1 und 2 gezeigten Rollen 1 bis 5 ausschliesslich einer übersichtlichen zeichnerischen Darstellung und brauchen daher in der Schweissmaschine nicht vorhanden sein. Ebenso ist auch die Kühltrommel 7 in den Figuren 1 bis 3 nur aus Gründen der Uebersichtlichkeit relativ lang dargestellt, damit man die beiden auf der Kühltrommel 7 vorgesehenen Führungsnuten 8 und 9 bzw. 10 und 11 und die Drahtführung des Elektrodendrahtes 12 in diesen beiden Führungsnuten gut unterscheiden kann ; in der praktischen Ausführung hat die Kühltrommel 7 aber natürlich in der Regel eine wesentlich geringere, meist unter ihrem halben Durchmesser liegende Länge, und die Führungsnuten liegen relativ dicht beieinander. Auch der in den Figuren 1 und 2 gezeigte Ringkern 13 ist nur in symbolischer Form dargestellt und könnte in der praktischen Ausführung beispielsweise von einer aus hochpermeablem Ferritkernmaterial bestehenden Laufrolle gebildet sein, über die der Elektrodendraht geführt ist und die in einem den magnetischen Ringschluss bildenden Topf aus dem gleichen Ferritkernmaterial läuft. Nur symbolisch angedeutet sind ferner auch der Antrieb der Elektrodenträgerrolle 14 in Fig. 1 bzw. 15 in Fig. 2 durch die sich drehende Antriebswelle 16, das zum Auswalzen des Elektrodendrahtes 12 vorgesehene Quetschaggregat mit den beiden Quetschrollen 17 und 18 sowie dem Umkehrgetriebe 19 und der einen Antriebsmotor sowie Mittel zur Steuerung der Drehzahl der Welle 20 umfassenden Antriebseinrichtung 21, das zur Erzielung einer vorbestimmten Drahtspannung des Elektrodendrahtes 12 vorgesehene Drahtspannaggregat 22 (das in der Regel eine mit einer Kraft belastete Umlenkrolle für den Elektrodendraht und Mittel zur Messung der Drahtlänge zwischen dieser Umlenkrolle und den Quetschrollen 17 und 18 bzw. zur Messung des Abstandes zwischen der Ist-Position dieser Umlenkrolle und einer vorgegebenen, einer bestimmten Drahtlänge zwischen Umlenkrolle und Quetschrollen entsprechenden Soll-Position der Umlenkrolle sowie Mittel zur Uebertragung der von dem gemessenen Abstand zwischen Ist- und Soll-Position der Umlenkrolle gebildeten Regelabweichung auf die Steuermittel der Antriebseinrichtung 21 zu einer derartigen Einregelung der Drehzahl der Welle 20 und damit der Quetschrollen 17 und 18, dass die Drahtlänge zwischen denselben und der Umlenkrolle im wesentlichen konstant bleibt bzw. die vorgegenannte Regelabweichung Null wird, umfasst), die zum Abziehen des Elektrodendrahtes 12 von der zweiten Elektrodenträgerrolle 15 und zur Weiterleitung desselben in einen Drahtzerhacker vorgesehene und mit Mitteln zur stufenweisen oder stetigen Aenderung der Fördergeschwindigkeit versehene ausgangsseitige Drahtfördereinrichtung 23 (die z. B. von einer mit konstanter Drehzahl angetriebenen Stufenscheibe mit einer Vielzahl von im Durchmesser fein abgestuften ringförmigen Führungsflächen für den Elektrodendraht gebildet oder entsprechend der in diesem Fall mit einer Förderscheibe auf der Welle 20 zu versehenden Antriebseinrichtung 21 aufgebaut sein kann) und die ausgangsseitige Drahtspannvorrichtung 24 (die entweder im Falle einer Ausbildung der Drahtfördereinrichtung 23 entsprechend der Antriebseinrichtung 21 wie das Drahtspannaggregat 22 ausgebildet sein kann und dann über den Uebertragungsweg 25 die Fördergeschwindigkeit der Drahtfördereinrichtung 23 so einregelt, dass sich auch beim Abziehen des Elektrodendrahtes 12 von der zweiten Elektrodenträgerrolle 15 eine vorbestimmte konstante Drahtspannung ergibt, oder die im Falle der Ausbildung der Drahtfördereinrichtung 23 als angetriebene Stufenscheibe z. B. von einer federbelasteten Rolle gebildet sein kann, über die der Elektrodendraht 12 läuft und deren Feder den Draht spannt, wobei entweder eine der Federspannung entsprechende Grösse angezeigt wird und die Einstellung der Fördergeschwindigkeit der Drahtfördereinrichtung 23 dann aufgrund dieser Anzeige von Hand erfolgt oder aber die federbelastete Rolle derart mit der die Drahtfördereinrichtung bildenden Stufenscheibe zusammenwirkt, dass der Elektrodendraht bei nachlassender Federspannung der federbelasteten Rolle selbsttätig auf die der nächsthöheren Fördergeschwindigkeitsstufe zugeordnete ringförmige Führungsfläche und bei zunehmender Federspannung der federbelasteten Rolle selbsttätig auf die der nächsttieferen Fördergeschwindigkeitsstufe zugeordnete ringförmige Führungsfläche übergeht). Alle diese in der Zeichnung nur symbolisch angedeuteten Teile der in den Figuren 1 und 2 schematisch dargestellten Schweissmaschinen sind von den vorbekannten Schweissmaschinen, mit denen das eingangs erwähnte bekannte Verfahren nach der DE-PS 21 26 497 durchgeführt wird, her bereits bekannt und bedürfen daher keiner weiteren näheren Erläuterung.

Bei der Durchführung des vorliegenden Verfahrens in der Schweissmaschine nach Fig. 1 oder 2 tritt der von einem nicht dargestellten Drahtvorrat oder Drahtspeicher abgezogene, zunächst im Querschnitt noch kreisrunde Elektrodendraht bei 27 in die Schweissmaschine ein und passiert zuerst das von den Quetschrollen 17 und 18 gebildete Quetschrollenpaar und wird dort auf eine abgeplattete Form mit zwei ungefähr parallelen Flachseiten und zwei abgerundeten Schmalseiten ausgewalzt, wobei sich der Drahtquerschnitt auf etwa 80 % bis 90 % des ursprünglichen Drahtquerschnitts verringert und sich der Draht entsprechend um ca. 20 % bis 10 % verlängert und wobei infolge der zu leistenden Formänderungsarbeit eine Erwärmung des Drahtes von der im Drahtvorrat herrschenden, in der Regel der Raumtemperatur entsprechenden Drahttemperatur auf ca. 60 °C bis 70 °C erfolgt.

Bei dem eingangs genannten bekannten Verfahren wurde der Elektrodendraht nun nach Passieren des Quetschrollenpaares ohne besondere Kühlmassnahmen und dementsprechend mit der erhöhten Drahttemperatur von z. B. 60 °C bis 70 °C abzüglich einer geringfügigen selbsttätigen Abkühlung von z. B. 5 °C auf dem Wege vom Quetschaggregat zur ersten Elektrodenträgerrolle unmittelbar der ersten Elektrodenträgerrolle zugeführt und dort auf der gekühlten Elektrodenträgerrolle nochmals um ca. 10 °C abgekühlt, so dass er die Schweissstelle etwa mit einer Temperatur von 45 °C bis 55 °C erreichte und dann durch Stromwärme des hindurchfliessenden Schweissstromes und Wärmeübertragung von der Schweissstelle her auf beispielsweise etwa 210 °C erhitzt wurde.

Bei dem vorliegenden Verfahren wird der Elektrodendraht 12 nun nach dem Austritt aus dem Quetschrollenpaar 17/18 zunächst noch durch das zur Kalibrierung vorgesehene Rollenwalzenpaar 6 hindurchgeführt und dort in seiner Breite auf die Breite der in den Elektrodenträgerrollen 14 und 15 vorgesehenen, nicht dargestellten Führungsnuten kalibriert. Bei dieser Kalibrierung erhält der Elektrodendraht 12 eine annähernd rechteckige Querschnittsform, wobei im wesentlichen die beiden Schmalseiten des ausgewalzten Elektrodendrahtes 12 abgeplattet und die noch ganz leicht konvex gekrümmten Flachseiten desselben eingeebnet werden und wobei sich wegen der damit verbundenen Formänderungsarbeit nochmals eine leichte Erhöhung der Drahttemperatur um z. B. etwa 5 °C ergibt.

Anschliessend durchläuft der Elektrodendraht 12 das Drahtspannaggregat 22, durch das in dem Elektrodendraht 12 in bekannter Weise im Zusammenwirken mit dem von den Quetschrollen 17 und 18, dem Umkehrgetriebe 19 und der Antriebseinrichtung 21 gebildeten Quetschaggregat eine vorbestimmte Drahtspannung erzeugt und aufrechterhalten wird. Als den Draht zurückhaltendes Organ wirkt dabei das Quetschaggregat, und die Drahtspannung wird im Prinzip durch eine Art federbelasteter Umlenkrolle für den Elektrodendraht 12 erzeugt, durch deren veränderliche Position die Walzgeschwindigkeit des Quetschaggregates derart eingeregelt wird, dass die Drahtlänge zwischen Quetschrollenpaar und Umlenkrolle im wesentlichen konstant bleibt.

Von dem Drahtspannaggregat 22 wird der Elektrodendraht 12 dann zur Kühltrommel 7 geführt und erreicht diese etwa mit einer Drahttemperatur von ca. 62 °C bis 72 °C, wobei sich die Erhöhung gegenüber der Ausgangstemperatur am Quetschrollenpaar aus der Erwärmung in dem Kalibrierrollenwalzenpaar 6 abzüglich der Abkühlung auf dem Wege vom Quetschrollenpaar 17/18 zur Kühltrommel 7 ergibt. Auf der Kühltrommel 7 wird der Elektrodendraht 12 in die Führungsnut 8 eingeführt und verlässt diese nach etwas weniger als einer Umschlingung der Kühltrommel 7 wieder. Der Umschlingungswinkel beträgt dabei ca. 300°. Der Kühltrommel 7 wird über die Wasserzuleitung 28 und den Trommeltragkasten 29 sowie die sich mit der Kühltrommel 7 mitdrehende, im Trommeltragkasten 29 gelagerte und abgedichtete hohle Welle 30 Kühlwasser mit einer Wassertemperatur von ca. 12 °C zugeführt, das an der Innenwand der hohlen Kühltrommel entlangströmt und diese auf etwa 12,5 °C bis 13,5 °C abkühlt und dann über ein innerhalb der hohlen Welle 30 angeordnetes feststehendes, in eine separate Abflusskammer in dem Trommeltragkasten 29 mündendes Rohr wieder aus der Kühltrommel 7 abgeführt wird und die separate Abflusskammer dann mit einer Austrittstemperatur von ca. 13 °C über die Wasserableitung 31 verlässt. Der Kühlwasserstrom durch die Kühltrommel 7 ist so bemessen, dass der Elektrodendraht 12 während seines Kontaktes mit der Kühltrommel 7 bzw. deren Führungsnut 8 bis auf etwa 20 °C bis 25 °C abgekühlt wird. Wenn der gleiche Effekt mit einem geringeren Kühlwasserstrom erzielt werden soll, dann empfiehlt es sich, den Elektrodendraht 12 wie im Prinzip in Fig. 3 gezeigt mehrere Male um die Kühltrommel 7 herumlaufen zu lassen. In Fig. 3 wird der Elektrodendraht 12 zuerst in die Führungsnut 10 eingeführt und verlässt diese wiederum nach etwas weniger als einer Umschlingung der Kühltrommel 7 und wird dann in der in Fig. 3 dargestellten Weise über die Laufrolle 26 geführt und nach deren Verlassen in die Führungsnut 11 der Kühltrommel 7 eingeführt, die er wiederum nach etwas weniger als einer Umschlingung der Kühltrommel 7 verlässt. Auf diese Weise lassen sich in dem in Fig. 3 gezeigten Beispiel Gesamtumschlingungswinkel bis etwa 630° erreichen, jedoch lässt sich diese Form der mehrfachen Umschlingung natürlich mittels weiterer Laufrollen und Führungsnuten beliebig oft wiederholen, so dass der Gesamtumschlingungswinkel bei einer solchen mehrfachen Umschlingung im Prinzip nicht beschränkt ist. Praktisch besteht allerdings insofern eine Beschränkung, als der Draht ja bei jeder Einführung auf eine Rolle oder Trommel auf den Radius derselben gebogen und beim Verlassen derselben dann wieder zurückgebogen wird und bei einer allzu öfteren Wiederholung dieses Hin- und Herbiegens die Gefahr eines Drahtbruches beträchtlich ansteigt.

Nach Verlassen der Kühltrommel wird der Elektrodendraht 12 dann mit einer Drahttemperatur von etwa 20 °C bis 25 °C der ersten Elektrodenträgerrolle 14 zugeführt. Wenn dabei die erste Elektrodenträgerrolle 14 wie in Fig. 2 die nicht angetriebene Elektrodenträgerrolle ist, empfiehlt es sich, den Elektrodendraht ähnlich wie in Fig. 2 gezeigt so in die Führungsnut der Elektrodenträgerrolle einzuführen, dass der Elektrodendraht vor Erreichen der Schweissstelle nicht oder nur ganz leicht auf dem Grund der Führungsnut aufliegt, weil dann nämlich etwaige an der Schweissstelle auftretenden Drahtdehnungen durch die Drahtspannung rückwärts aus der Schweissstelle herausgezogen werden, ohne dass damit gleichzeitig auch auf die Elektrodenträgerrolle eine überlagerte Rückwärtsbewegung übertragen wird, so dass man auf diese Weise ohne Schwierigkeiten zu vollständig gleichen Umfangsgeschwindigkeiten der beiden Elektrodenträgerrollen gelangen kann. Das vorliegende Verfahren ist für diese Möglichkeit besonders geeignet, weil der Elektrodendraht 12 ohnehin mit einer sehr geringen Drahttemperatur in die erste Elektrodenträgerrolle einläuft und daher ohne weiteres von dem üblichen, etwa 90° vor der Schweissstelle liegenden Einlaufpunkt in die Führungsnut der Elektrodenträgerrolle, bei dem sich, wie oben schon erwähnt, noch eine Abkühlung des Drahtes bis zum Erreichen der Schweissstelle ergibt, abgegangen werden kann.

Der mit einer Drahttemperatur von etwa 20 °C bis 25 °C in die erste Elektrodenträgerrolle einlaufende Elektrodendraht 12 erhitzt sich aufgrund seiner geringeren Anfangstemperatur nur auf etwa 180 °C bis 185 °C und kommt somit nur auf eine ca. 25 °C bis 30 °C niedrigere Endtemperatur an der Schweissstelle als bei dem eingangs genannten bekannten Verfahren, und dies hat aus den oben schon erläuterten Gründen eine beträchtliche Erhöhung der Betriebssicherheit bzw. eine sentlich unkritischere Einstellung der Betriebsdaten zur Folge.

Nach Passieren der Schweissstelle verbleibt der Elektrodendraht 12 noch über einen Winkel von ca. 180° in der Führungsnut der Elektrodenträgerrolle 14 und wird dort durch die Kühlung der Elektrodenträgerrolle 14 bis auf ca. 55 °C beim Verlassen derselben und damit auf eine etwa 15 °C bis 20 °C unter der entsprechenden Drahttemperatur bei dem eingangs genannten bekannten Verfahren liegende Temperatur abgekühlt.

Von der Elektrodenträgerrolle 14 wird der Elektrodendraht 12 dann wiederum zur Kühltrommel 7 geführt und auf derselben in die Führungsnut 9 eingeführt, die er nach etwas weniger als einer Umschlingung der Kühltrommel 7 wieder verlässt. Der Umschlingungswinkel beträgt dabei wiederum ca. 300°, und der mit einer Drahttemperatur von ca. 55 °C in die Kühltrommel 7 einlaufende Elektrodendraht wird dort um ca. 25 °C auf etwa 30 °C abgekühlt. Die Abkühlung ist in diesem Fall deswegen geringer als vorher beim Durchlaufen der Führungsnut 8, weil sich in diesem Fall der Abkühlung eine Stromerwärmung überlagert, die durch den über den Elektrodendraht 12 bzw. dessen Drahtabschnitt zwischen erster und zweiter Elektrodenträgerrolle 14 und 15 fliessenden Nebenstrom zum Schweisstrom verursacht wird. Damit dieser Nebenstrom und damit die dadurch verursachte Stromerwärmung des Drahtes nicht zu gross wird, ist die Kühltrommel 7 an der gestrichelt angedeuteten Stelle 32 in zwei elektrisch voneinander isolierte Teile unterteilt, so dass dem Drahtabschnitt zwischen Elektrodenträgerrolle 14 und Führungsnut 9 nicht noch der Drahtabschnitt zwischen Elektrodenträgerrolle 14 und Führungsnut 8 parallelgeschaltet wird, was ja eine Widerstandsverminderung und damit eine Erhöhung des Nebenstromes und der durch diesen verursachten Stromerwärmung zur Folge hätte. Anstelle einer solchen Aufteilung der Kühltrommel 7 in zwei voneinander elektrisch isolierte Teile oder auch zusätzlich hierzu kann auch in dem Drahtabschnitt zwischen Führungsnut 9 und der zweiten Elektrodenträgerrolle 15 der dort angedeutete Ringkern 13 eingesetzt werden, durch den in diesem Drahtabschnitt eine elektrische Gegenurspannung erzeugt wird, die bei geeigneter Bemessung des Ringkernes 13 den besagten Nebenstrom und damit natürlich auch die durch diesen verursachte Stromerwärmung nahezu vollständig unterdrücken kann, womit natürlich auch die Aufteilung der Kühltrommel in zwei elektrisch voneinander isolierte Teile überflüssig würde. Bei den praktischen Ausführungsbeispielen wurde auf den Ringkern 13 aber verzichtet, weil die Reduktion der Temperatur des Elektrodendrahtes 12 in der Führungsnut 9 ausreichend war. Ausserdem dürfte natürlich eine zweite Umschlingung der Kühltrommel 7 technisch weniger aufwendig als der Ringkern 13 sein.

Nach Verlassen der Führungsnut 9 der Kühltrommel 7 wird der Elektrodendraht 12 dann der zweiten Elektrodenträgerrolle 15 zugeführt und erhitzt sich dort an der Schweissstelle bis auf ca. 190 °C und damit auf eine ca. 45 °C unter der entsprechenden Drahttemperatur bei dem eingangs genannten bekannten Verfahren liegende Temperatur.

Nach Verlassen der zweiten Elektrodenträgerrolle 15 durchläuft, der Elektrodendraht 12 dann noch in üblicher Weise die Drahtspannvorrichtung 24 und die Drahtfördereinrichtung 23, deren Aufbau und Funktion ja oben schon erläutert worden ist, und wird dann einem nicht dargestellten Drahtzerhacker zugeführt.

## Patentansprüche

1. Verfahren zum elektrischen Widerstandsrollennahtschweissen mit Hilfe von nur einem Elektrodendraht (12), der zuerst über eine erste und dann über eine zweite von zwei gegeneinander pressbaren Elektrodenträgerrollen (14, 15) läuft und dessen Festigkeit durch Auswalzen vor dem Einlauf in die erste Elektrodenträgerrolle erhöht wird, dadurch gekennzeichnet, dass der Elektrodendraht (12) in mindestens einem der von ihm durchlaufenen beiden Bereiche zwischen dem Auswalzen und dem Einlauf in die erste Elektrodenträgerrolle (14) und zwischen dem Auslauf aus der ersten Elektrodenträgerrolle (14) und dem Einlauf in die zweite Elektrodenträgerrolle (15) mit Hilfe von mindestens einer Kühlvorrichtung (7) gekühlt wird.

2. Verfahren nach Anspruch 1, dadurch gekennzeichnet, dass der Elektrodendraht (12) in mindestens einem der beiden Bereiche über eine als Kühlvorrichtung wirkende, von einem zur Wärmeabfuhr dienenden Kühlmittel, vorzugsweise Wasser, durchströmte Kühltrommel (7) läuft und vorzugsweise zur Vermeidung von Querverschiebungen in Trommelachsrichtung durch. Führungsnuten (8, 9 ; 10, 11) geführt wird.

3. Verfahren nach Anspruch 1 oder 2, dadurch gekennzeichnet, dass der Elektrodendraht (12) zur Vermeidung von Querverschiebungen in Führungsnuten nach dem Auswalzen seitlich an seinen durch das Auswalzen entstandenen Schmalseiten, vorzugsweise mittels eines mit einer Kalibriernut in mindestens einer seiner beiden Rollenwalzen versehenen Rollenwalzenpaares (6), mindestens annähernd auf die Breite der schmalsten der zu durchlaufenden Führungsnuten kalibriert wird.

4. Verfahren nach Anspruch 2 oder 3, dadurch gekennzeichnet, dass der Elektrodendraht (12) derart über die Kühltrommel (7) geführt wird, dass er über einen Winkelbereich von insgesamt mindestens 180°, vorzugsweise mehr als 250°, auf der Kühltrommel (7) aufliegt.

5. Verfahren nach Anspruch 4, dadurch gekennzeichnet, dass der Elektrodendraht (12) in mindestens einem der beiden genannten Bereiche derart über die Kühltrommel (7) und eine neben derselben angeordnete Laufrolle (26) mit zur Kühltrommelachse mindestens annähernd paralleler Laufrollenachse und vorzugsweise mindestens annähernd gleichem Durchmesser wie dem der Kühltrommel (7) geführt wird, dass der Elektrodendraht (12) nacheinander über eine erste (10) und eine zweite (11) Führungsnut der Kühltrommel (7) und dazwischen so über die Laufrolle (26) läuft, dass sich diese in entgegengesetztem Drehsinn wie die Kühltrommel (7) dreht.

6. Verfahren nach einem der Ansprüche 1 bis 5, dadurch gekennzeichnet, dass der Elektrodendraht (12) in mindestens einem der beiden genannten Bereiche bis auf eine weniger als 25 °C, vorzugsweise weniger als 15 °C, über der Raumtemperatur liegende Temperatur abgekühlt wird.

7. Verfahren nach einem der Ansprüche 1 bis 6, dadurch gekennzeichnet, dass der Elektrodendraht (12) in dem Bereich zwischen erster (14) und zweiter (15) Elektrodenträgerrolle zur Herabsetzung der Drahterwärmung infolge des in diesem Bereich über den Elektrodendraht (12) fliessenden Nebenstromes zum Schweissstrom durch einen vorzugsweise rohrförmigen Ringkern (13) aus einem hochpermeablen Material geführt wird, durch den in dem Elektrodendraht (12) eine den Nebenstrom herabsetzende Gegenspannung induziert wird.

8. Verfahren nach einem der Ansprüche 1 bis 7, dadurch gekennzeichnet, dass der Elektrodendraht (12) in beiden Bereichen mittels ein und derselben Kühlvorrichtung (7) gekühlt wird.

9. Verfahren nach Anspruch 8, dadurch gekennzeichnet, dass der Elektrodendraht (12) in beiden Bereichen über ein und dieselbe Kühltrommel (7) geführt wird.

10. Verfahren nach Anspruch 9, dadurch gekennzeichnet, dass der Elektrodendraht (12) zur Vermeidung einer elektrischen Parallelschaltung der innerhalb der beiden genannten Bereiche jeweils zwischen Kühltrommel (7) und erster Elektrodenträgerrolle (14) befindlichen Elektrodendrahtabschnitte und einer dadurch infolge der daraus resultierenden elektrischen Widerstandsverminderung und der sich damit ergebenden Stromerhöhung des im Bereich zwischen erster (14) und zweiter (15) Elektrodenträgerrolle über den Elektrodendraht (12) fliessenden Nebenstromes zum Schweissstrom verursachten Erhöhung der durch den Nebenstrom bewirkten Drahterwärmung in den beiden genannten Bereichen über elektrisch im wesentlichen voneinander isolierte Teile der Kühltrommel (7) geführt wird.

11. Verfahren nach Anspruch 7 und einem der Ansprüche 8 bis 10, dadurch gekennzeichnet, dass der Elektrodendraht (12) in dem zwischen Kühlvorrichtung (7) und zweiter Elektrodenträgerrolle (15) liegenden Teil des Bereiches zwischen erster (14) und zweiter (15) Elektrodenträgerrolle durch den Ringkern (13) geführt wird.

12. Verfahren nach einem der Ansprüche 1 bis 11, dadurch gekennzeichnet, dass der Elektrodendraht (12) bei Antrieb von einer (15) der beiden Elektrodenträgerrollen (14, 15) zur Erzielung von in beiden Bereichen im wesentlichen gleichgrossen Durchlaufgeschwindigkeiten durch die Kühlvorrichtung (7), insbesondere von im wesentlichen gleichgrossen Laufgeschwindigkeiten über eine als Kühlvorrichtung vorgesehene Kühltrommel (7), zwischen den genannten beiden Bereichen über die nicht angetriebene Elektrodenträgerrolle (14) geführt wird und vorher, vorzugsweise vor seinem Einlauf in die Kühlvorrichtung (7), zur Erzielung einer ausreichenden Drahtspannung eine den durchlaufenden Draht (12) zurückhaltende, vorzugsweise als Drahtbremse ausgebildete Vorrichtung (17/18) durchläuft.

13. Elektrische Schweissmaschine zum Widerstandsrollennahtschweissen mit Hilfe von nur einem zuerst über eine erste (14) und dann über eine zweite (15) von zwei gegeneinander pressbaren Elektrodenträgerrollen (14, 15) laufenden Elektrodendraht (12) mit Mitteln (17, 18, 19, 20, 21) zum eine Festigkeitserhöhung des Elektrodendrahtes (12) bewirkenden Auswalzen desselben vor dem Einlauf in die erste Elektrodenträgerrolle (14), gekennzeichnet durch mindestens eine Kühlvorrichtung (7) zur Kühlung des Elektrodendrahtes (12) in mindestens einem der beiden Drahtführungsbereiche zwischen den Auswalzmitteln (17, 18) und der ersten Elektrodenträgerrolle (14) und zwischen der ersten (14) und der zweiten (15) Elektrodenträgerrolle.

14. Schweissmaschine nach Anspruch 13, gekennzeichnet durch mindestens eine als Kühlvorrichtung dienende, vorzugsweise mit Führungsnuten (8, 9 ; 10, 11) versehene Kühltrommel (7) zur Kühlung des Elektrodendrahtes (12) in mindestens einem der beiden genannten Drahtführungsbereiche.

15. Schweissmaschine nach Anspruch 13 oder 14, gekennzeichnet durch ein mit einer Kalibriernut in mindestens einer seiner beiden Rollenwalzen versehenes Rollenwalzenpaar (6) in dem Drahtführungsbereich zwischen Auswalzmitteln (17, 18) und erster Elektrodenträgerrrolle (14).

16. Schweissmaschine nach Anspruch 14 oder 15, gekennzeichnet durch Mittel zu einer derartigen Drahtführung, dass der Elektrodendraht (12) über einen Winkelbereich von insgesamt mindestens 180°, vorzugsweise mehr als 250°, auf der Kühltrommel (7) aufliegt.

17. Schweissmaschine nach Anspruch 16, gekennzeichnet durch mindestens eine neben der Kühltrommel (7) angeordnete Laufrolle (26) mit zur Kühltrommelachse mindestens annähernd paralleler Laufrollenachse und vorzugsweise mindestens annähernd gleichem Durchmesser wie dem der Kühltrommel (7) sowie eine derartige Drahtführung, dass der Elektrodendraht (12) nacheinander über eine erste (107) und eine zweite (11) Führungsnut der Kühltrommel (7) und dazwischen so über die Laufrolle (26) läuft, dass sich diese im entgegengesetzten Drehsinn wie die Kühltrommel (7) dreht.

18. Schweissmaschine nach einem der Ansprüche 13 bis 17, gekennzeichnet durch einen den Elektrodendraht (12) im Drahtführungsbereich zwischen erster (14) und zweiter (15) Elektrodenträgerrolle umschliessenden, vorzugsweise rohrförmigen Ringkern (13) aus einem hochpermeablen Material.

19. Schweissmaschine nach einem der Ansprüche 13 bis 18, gekennzeichnet durch eine zur Kühlung des Elektrodendrahtes (12) in beiden genannten Drahtführungsbereichen dienende Kühlvorrichtung (7), vorzugsweise eine Kühltrommel.

20. Schweissmaschine nach Anspruch 19, gekennzeichnet durch eine Kühltrommel (7) mit mehreren elektrisch im wesentlichen voneinander isolierte Trommelteile sowie eine derartige Drahtführung, dass der Elektrodendraht (12) in den beiden genannten Drahtführungsbereichen über elektrisch im wesentlichen voneinander isolierte Trommelteile läuft.

21. Schweissmaschine nach Anspruch 18 und einem der Ansprüche 19 und 20, dadurch gekennzeichnet, dass der Ringkern (13) den Elektrodendraht (12) in dem zwischen Kühlvorrichtung (7) und zweiter Elektrodenträgerrolle (15) liegenden Teil des Drahtführungsbereiches zwischen erster (14) und zweiter (15) Elektrodenträgerrolle umschliesst.

22. Schweissmaschine nach einem der Ansprüche 13 bis 21, gekennzeichnet durch einen Antrieb (16) für die zweite Elektrodenträgerrolle (15) und den Elektrodendraht (12) zurückhaltende Mittel (17/18) zur Erzeugung einer Drahtspannung in der Drahtführung vor der ersten Elektrodenträgerrolle (14) und vorzugsweise vor der Kühlvorrichtung (7).

## Claims

1. A method for electrical resistance seam welding with the aid of only one electrode wire (12) which runs first over a first and then over a second of two electrode supporting rollers (14, 15) which can be pressed against one another, the strength of the wire being increased by rolling out before entry into the first electrode supporting roller, characterised in that the electrode wire (12) is cooled by means of at least one cooling device (7) in at least one of the two regions through which it passes between the rolling out and the entry into the first electrode supporting roller (14) and between the exit from the first electrode supporting roller (14) and the entry into the second electrode supporting roller (15).

2. A method as claimed in claim 1, characterised in that, in at least one of the two regions, the electrode wire (12) runs over a cooling drum (7) which acts as a cooling device and through which a coolant, preferably water, serving to remove heat flow, the electrode wire preferably being guided through guide grooves (8, 9 ; 10, 11) in order to avoid transverse displacement in the axial direction of the drum.

3. A method as claimed in claim 1 or 2, characterised in that, in order to avoid transverse displacements in guide grooves, the electrode wire (12) is sized, after the rolling out, laterally at its narrow sides resulting from the rolling out, preferably by means of a pair of rolling rolls (6) provided with a sizing groove in at least one of its two rolling rolls, at least substantially to the width of the narrowest of the guide grooves through which it has to pass.

4. A method as claimed in claim 2 or 3, characterised in that the electrode wire (12) is guided over the cooling drum (7) in such a manner that it rests on the cooling drum (7) over an angular range of a total of at least 180°, preferably more than 250°.

5. A method as claimed in claim 4, characterised in that, in at least one of the two said regions, the electrode wire (12) is guided over the cooling drum (7) and over a roller (26) disposed beside the latter, the roller having an axis at least substantially parallel to the axis of the cooling drum and preferably at least substantially the same diameter as that of the cooling drum (7), in such a manner that the electrode wire (12) runs in succession over a first (10) and a second (11) guide groove of the cooling drum (7) and, in between, over the roller (26) in such a manner that this rotates in the opposite direction to the cooling drum (7).

6. A method as claimed in one of the claims 1 to 5, characterised in that, in at least one of the said two regions, the electrode wire (12) is cooled to a temperature which is less than 250 °C, preferably less than 15 °C, above room temperature.

7. A method as claimed in one of the claims 1 to 6, characterised in that, in the region between the first (14) and second (15) electrode supporting rollers, in order to reduce the heating of the wire as a result of the secondary current to the welding current flowing through the electrode wire (12) in this region, the electrode wire (12) is guided through a preferably tubular annular core (13) of a highly permeable material, through which a countervoltage reducing the secondary current is induced in the electrode wire (12).

8. A method as claimed in one of the claims 1 to 7, characterised in that the electrode wire (12) is cooled by means of one and the same cooling device (7) in both regions.

9. A method as claimed in claim 8, characterised in that the electrode wire (12) is guided over one and the same cooling drum (7) in both regions.

10. A method as claimed in claim 9, characterised in that, in order to avoid an electrical parallel connection of the portions of electrode wire between cooling drum (7) and first electrode supporting roller (14) within each of the said two regions and to avoid an increase in the heating of the wire caused by the secondary current, which increase would be caused by the resulting reduction in electrical resistance and by the consequent increase in current of the secondary current to the welding current flowing through the electrode wire (12) in the region between the first (14) and second (15) electrode supporting rollers, the electrode wire (12) is guided in the said two regions over parts of the cooling drum (7) which are substantially electrically insulated from one another.

11. A method as claimed in claim 7 and one of the claims 8 to 10, characterised in that, in the portion of the region between first (14) and second (15) electrode supporting rollers situated between cooling device (7) and second electrode supporting roller (15), the electrode wire (12) is guided through the annular core (13).

12. A method as claimed in one of the claims 1 to 11, characterised in that, if one (15) of the two electrode supporting rollers (14, 15) is driven, in order to achieve substantially equal speeds of passage through the cooling device (7) in both regions, particularly substantially equal speeds of running over a cooling drum (7) provided as a cooling device, the electrode wire (12) is guided, between the said two regions, over the non-driven electrode supporting roller (14) and previously, preferably before its entry into the cooling device (7), it passes through a device (17/18) which holds back the wire (12) passing through and is preferably constructed in the form of a wire brake, in order to achieve an adequate wire tension.

13. An electric welding machine for resistance roller seam welding with the aid of only one electrode wire (12) which runs first over a first (14) and then over a second (15) of two electrode supporting rollers (14, 15) which can be pressed against one another, said machine having means (17, 18, 19, 20, 21) for rolling out the electrode wire (12) in order to increase the strength thereof before its entry into the first electrode supporting roller (14), characterised by at least one cooling device (7) to cool the electrode wire (12) in at least one of the two wire-guiding regions between the rolling-out means (17, 18) and the first electrode supporting roller (14) and between the first (14) and second (15) electrode supporting rollers.

14. A welding machine as claimed in claim 13, characterised by at least one cooling drum (7) serving as a cooling device and preferably provided with guide grooves (8, 9 ; 10, 11) to cool the electrode wire (12) in at least one of the said two wire-guiding regions.

15. A welding machine as claimed in claim 13 or 14, characterised by a pair of rolling rolls (6) in the wire-guiding region between rolling-out means (17, 18) and first electrode supporting roller (14), said pair of rolling rolls being provided with a sizing groove in at least one of its two rolling rolls.

16. A welding machine as claimed in claim 14 or 15, characterised by means for guiding the wire in such a manner that the electrode wire (12) rests on the cooling drum (7) over an angular range totalling at least 180°, preferably more than 250°.

17. A welding machine as claimed in claim 16, characterised by at least one roller (26) disposed beside the cooling drum (7) and having an axis at least substantially parallel to the axis of the cooling drum and preferably at least substantially the same diameter as that of the cooling drum (7) and by such a guiding of the wire that the electrode wire (12) runs in succession over a first (10) and a second (11) guide groove in the cooling drum (7) and, in between, over the roller (26) in such a manner that this rotates in the opposite direction to the cooling drum (7).

18. A welding machine as claimed in one of the claims 13 to 17, characterised by a preferably tubular annular core (13) of a highly permeable material surrounding the electrode wire (12) in the wire-guiding region between first (14) and second (15) electrode supporting rollers.

19. A welding machine as claimed in one of the claims 13 to 18, characterised by a cooling device (7), preferably a cooling drum, serving to cool the electrode wire (12) in both said wire-guiding regions.

20. A welding machine as claimed in claim 19, characterised by a cooling drum (7) having a plurality of drum parts which are substantially insulated from one another electrically and by such a guiding of the wire that, in the said two wire-guiding regions, the electrode wire (12) runs over parts of the drum which are substantially insulated from one another electrically.

21. A welding machine as claimed in claim 18 and one of the claims 19 and 20, characterised in that, in the part of the wire-guiding region between cooling device (7) and second electrode supporting roller (15), the annular core (13) surrounds the electrode wire (12) between the first (14) and second (15) electrode supporting rollers.

22. A welding machine as claimed in one of the claims 13 to 21, characterised by a drive (16) for the second electrode supporting roller (15) and by means (17/18) restraining the electrode wire (12) in order to produce a wire tension in the guiding of the wire in front of the first electrode supporting roller (14) and preferably in front of the cooling device (7).

## Revendications

1. Procédé de soudage électrique par résistance à rouleaux à l'aide d'un seul fil-électrode (12) qui passe tout d'abord sur un premier puis sur un deuxième de deux rouleaux de support d'électrode (14, 15) pressés l'un contre l'autre, et dont la solidité est accrue par laminage avant entrée sur le premier rouleau, caractérisé en ce que le fil-électrode (12) est refroidi par au moins un dispositif de refroidissement (7) dans l'une au moins des deux zones qu'il traverse, entre le laminage et l'entrée du premier rouleau porte-électrode (14) et entre la sortie du premier rouleau (14) et l'entrée du deuxième rouleau (15).

2. Procédé selon la revendication 1, caractérisé en ce que le fil-électrode (12) passe, dans au moins l'une des deux zones, sur un tambour de refroidissement (7) servant de dispositif de refroidissement, traversé par un agent de refroidissement servant à évacuer la chaleur, de préférence de l'eau, et est guidé de préférence par des rainures de guidage (8, 9 ; 10, 11) pour éviter des déplacements transversaux dans la direction de l'axe du tambour.

3. Procédé selon la revendication 1 ou 2, caractérisé en ce que, pour éviter des déplacements transversaux dans les rainures de guidage, le fil-électrode (12) est calibré après le laminage, latéralement, sur ses petits côtés résultant du laminage, de préférence au moyen d'un couple de cylindres (6) pourvu d'une rainure de calibrage dans au moins l'un de ces deux cylindres, au moins approximativement sur la largeur de la plus étroite des rainures de guidage à traverser.

4. Procédé selon la revendication 2 ou 3, caractérisé en ce que le fil-électrode (12) est guidé sur le tambour de refroidissement (7) de telle sorte qu'il repose sur ce tambour sur une plage angulaire d'au total au moins 180°, de préférence de plus de 250°.

5. Procédé selon la revendication 4, caractérisé en ce que le fil-électrode (12) est guidé dans au moins l'une des deux zones citées sur le tambour de refroidissement (7) et sur une poulie (26) disposée à côté de celui-ci et ayant un axe au moins approximativement parallèle à l'axe du tambour de refroidissement et un diamètre de préférence au moins à peu près équivalent à celui du tambour de refroidissement (7), en ce que le fil-électrode (12) passe successivement dans une première (10) puis une deuxième (11) rainures de guidage du tambour de refroidissement (7) et entre les deux sur la poulie (26), de sorte que celle-ci tourne dans le sens contraite de celui du tambour de refroidissement (7).

6. Procédé selon l'une des revendications 1 à 5, caractérisé en ce que le fil-électrode (12) est refroidi dans au moins l'une des deux zones citées, jusqu'à une température supérieure de moins de 25 °C, de préférence de moins de 15 °C, à la température ambiante.

7. Procédé selon l'une des revendications 1 à 6, caractérisé en ce que, dans la zone comprise entre le premier (14) et le deuxième (15) rouleaux porte-électrode, afin de diminuer l'échauffement du fil dû au courant induit vers le courant de soudage qui passe dans le fil-électrode (12) dans cette zone, le fil-électrode (12) est guidé à travers un noyau toroïdal (13) de préférence tubulaire, en matière hautement perméable qui induit, dans le fil électrique (12), une contre-tension abaissant le courant induit.

8. Procédé selon l'une des revendications 1 à 7, caractérisé en ce que le fil-électrode (12) est refroidi dans les deux zones au moyen d'un seul et même dispositif de refroidissement (7).

9. Procédé selon la revendication 8, caractérisé en ce que le fil-électrode (12) est guidé dans les deux zones par un seul et même tambour de refroidissement (7).

10. Procédé selon la revendication 9, caractérisé en ce que, pour éviter un branchement électrique en parallèle des tronçons de fil-électrode se trouvant à l'intérieur des deux zones citées, entre le tambour de refroidissement (7) et le premier rouleau porte-électrode (14), et par conséquent un accroissement de l'échauffement du fil dû au courant secondaire, causé par la diminution de la résistance électrique qui en résulte et par l'élévation du courant secondaire au courant de soudage traversant le fil-électrode (12) dans la zone comprise entre le premier (14) et le deuxième (15) rouleaux porte-électrode, le fil-électrode (12) passe, dans les deux zones citées, par des parties du tambour de refroidissement (7), sensiblement isolées électriquement les unes des autres.

11. Procédé selon la revendication 7 et l'une des revendications 8 à 10, caractérisé en ce que le fil-électrode (12) traverse le noyau toroïdal (13) dans la partie de la zone entre le premier (14) et le deuxième (15) rouleaux porte-électrode située entre le dispositif de refroidissement (7) et le deuxième rouleau porte-électrode (15).

12. Procédé selon l'une des revendications 1 à 11, caractérisé en ce que, l'un (15) des deux rouleaux porte-électrode (14, 15) étant entraîné pour obtenir dans les deux zones des vitesses sensiblement égales de traversée du dispositif de refroidissement (7), en particulier des vitesses sensiblement égales de passage sur un tambour de refroidissement (7) prévu comme dispositif de refroidissement, le fil-électrode (12) passe entre les deux zones citées, sur le rouleau porte-électrode non entraîné (14) et auparavant, de préférence avant son entrée dans le dispositif de refroidissement (7), traverse un dispositif (17, 18) conformé de préférence en frein de fil, retenant le fil (12) en vue de l'obtention d'une tension de fil suffisante.

13. Machine à souder électrique pour soudage par résistance à rouleaux à l'aide d'un seul fil-électrode (12) passant tout d'abord sur un premier (14) puis sur un deuxième (15) de deux rouleaux porte-électrode (14, 15) pressés l'un contre l'autre, comportant des moyens (17, 18, 19, 20, 21) de laminage du fil-électrode (12) destiné à accroître la résistance de ce dernier avant l'entrée sur le premier rouleau (14), caractérisée par au moins un dispositif de refroidissement (7) pour le refroidissement du fil-électrode (12) dans au moins l'une des deux zones de guidage du fil entre les moyens de laminage (17, 18) et le premier rouleau (14) et entre le premier (14) et le deuxième (15) rouleaux porte-électrode.

14. Machine à souder selon la revendication 13, caractérisée par au moins un tambour de refroidissement (7) servant de dispositif de refroidissement et pourvu de préférence de rainures de guidage (8, 9 ; 10, 11), pour le refroidissement du fil-électrode (12) dans au moins l'une des deux zones citées de guidage du fil.

15. Machine à souder selon la revendication 13 ou 14, caractérisée par un couple de cylindres de laminage pourvu d'une rainure de calibrage dans au moins un de ces deux cylindres, dans la zone de guidage du fil entre les moyens de laminage (17, 18) et la première bobine de fil (14).

16. Machine à souder selon la revendication 14 ou 15, caractérisée par des moyens de guidage de fil tel que le fil-électrode (12) repose sur le tambour de refroidissement (7) sur une plage angulaire d'au moins 180° au total, de préférence supérieure à 250°.

17. Machine à souder selon la revendication 16, caractérisée par au moins une poulie (26) disposée à côté du tambour de refroidissement (7) avec un axe au moins approximativement parallèle à l'axe du tambour de refroidissement et de préférence un diamètre au moins approximativement égal à celui du tambour de refroidissement (7) ainsi que par un guidage de fil tel que le fil-électrode (12) passe successivement par une première (10) puis par une deuxième (11) rainures de guidage du tambour de refroidissement (7) et entre elles sur la poulie (26), celle-ci tournant dans le sens contraire à celui du tambour de refroidissement (7).

18. Machine à souder selon l'une des revendications 13 à 17, caractérisée par un noyau toroïdal (13), de préférence tubulaire, en matière hautement perméable, entourant le fil-électrode (12) dans la zone de guidage du fil entre le premier (14) et le deuxième (15) rouleaux porte-électrode.

19. Machine à souder selon l'une des revendications 13 à 18, caractérisée par un dispositif de refroidissement (7), de préférence un tambour de refroidissement, servant à refroidir le fil-électrode (12) dans les deux zones de guidage du fil citées.

20. Machine à souder selon la revendication 19, caractérisée par un tambour de refroidissement (7) comportant plusieurs parties de tambour sensiblement isolées électriquement les unes des autres ainsi qu'un guidage de fil tel que le fil-électrode (12) passe dans les deux zones de guidage du fil citées, sur des parties de tambour sensiblement isolées électriquement les unes des autres.

21. Machine à souder selon la revendication 18, et l'une des revendications 19 et 20, caractérisée en ce que le noyau toroïdal (13) entoure le fil-électrode (12) dans la partie de la zone de guidage du fil comprise entre le premier (14) et le deuxième (15) rouleaux porte-électrode, située entre le dispositif de refroidissement (7) et le deuxième rouleau porte-électrode (15).

22. Machine à souder selon l'une des revendications 13 à 21, caractérisée par un entraînement (16) pour le deuxième rouleau porte-électrode (15) et des moyens (17, 18) retenant le fil-électrode (12) afin de produire une tension de fil dans le guidage du fil avant le premier rouleau porte-électrode (14) et de préférence avant le dispositif de refroidissement (7).

0 122 333

FIG. 1

FIG. 3

FIG. 2